# EUROPÄISCHE PATENTSCHRIFT

(11) **EP 2 319 297 B1**
(45) Veröffentlichungstag und Bekanntmachung des Hinweises auf die Patenterteilung: **29.06.2016**
(21) Anmeldenummer: 10189611.6
(22) Anmeldetag: 02.11.2010
(51) Int. Cl.: A01J 15/12

(54) **Vorrichtung und Verfahren zum Herstellen von mehreren Buttersorten**
Device and method for manufacturing multiple butter varieties
Dispositif et procédé de fabrication de plusieurs types de beurre

(30) Priorität: 05.11.2009 DE 102009044429
(43) Veröffentlichungstag der Anmeldung: 11.05.2011
(73) Patentinhaber: GEA Mechanical Equipment GmbH, 59302 Oelde (DE)
(72) Erfinder: Klapper, Siegfried, 33442, Herzebrock-Clarholz (DE); Hinze, Heinz, 59269, Beckum (DE); Bräutigam, Carsten, 59302, Oelde (DE)
(74) Vertreter: Specht, Peter

(56) Entgegenhaltungen:
- EP-A1- 1 920 650
- DE-B- 1 206 647
- US-A- 3 109 740

## Beschreibung

Die Erfindung beschreibt eine Vorrichtung und ein Verfahren zum Herstellen von mehreren Buttersorten nach den Oberbegriffen der Ansprüche 1 und 14.

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Schlagsahnebildung, der anschließenden Butterkombildung, des Abtrennens von Buttermilch und des Knetens der Butter automatisiert werden. Dabei wurden die Prozesse der Butterkornbildung von Butterungstrommeln und das Kneten des erhaltenen Butterzwischenproduktes von Abpressem mit motorischen Schneckenantrieben gewährleistet.

Im Prozess der Butterung kann ein Zudosieren von zusätzlichen Geschmacksstoffen erfolgen. So können verschiedene Buttermischungen erzeugt werden. Oftmals werden jedoch nur verschiedene Buttermischungen in kleinerem Umfang verlangt, so dass eine Teilung der Buttermasse nach der Butterung erfolgen muss, um unterschiedliche Buttermischungen zu produzieren.

Die EP 1 920 650 offenbart eine Vorrichtung und ein Verfahren in welchem die Buttermenge nach dem Butterungsprozess oder nach Abpresserstufen aufgeteilt wird und die Zudosierung von zusätzlichen Geschmacksstoffen an gesonderten Zudosiervorrichtungen erfolgt. Hierzu wird ein Butterendprodukt im Anschluss an die Butterung in Teilmassen aufgeteilt und durch eine strömungsregulierende oder -erzeugende Einheit in Überführungsleitungen an die Zudosiervorrichtungen weitergeleitet.

Diese Prozessführung hat den Nachteil, dass mehrere zusätzliche Vorrichtungen, beispielsweise zwei Pumpen, zur Überführung der geteilten Buttermassen notwendig sind um deren Fließgeschwindigkeit aufrecht zu erhalten. Die Zudosier-vorrichtungen der EP 1 920 650 bringen zudem einen erhöhten Platz- und Energiebedarf mit sich.

Zudem können Butteranteile bei dem Schritt der Überführung an den Wandungen der Überführungsleitungen absetzen und die Überführungswege blockieren.

Zum Stand der Technik sei ferner die US 3 109 740 A genannt, bei der eine Aufteilung eines Butterzwischenprodukts nach Durchlaufen einer Abpressstufe vorgenommen wird..

Die Erfindung setzt daher bei der Aufgabe an, eine vereinfachte Vorrichtung und ein vereinfachtes Verfahren zur Herstellung von mehreren Buttersorten zu schaffen.

Die Erfindung löst die Aufgabe durch eine Vorrichtung mit den Merkmalen des Anspruchs 1 und durch ein Verfahren mit den Merkmalen des Anspruchs 14.

Vorteilhafte Ausgestaltungen der Erfindung sind den Unteransprüchen zu entnehmen.

Dabei umfasst eine Butterungsmaschine in einer ersten Abpresserstufe einen Abpresser, in welchem mindestens zwei Sektionen zur Mengenaufteilung eines Butterzwischenproduktes angeordnet sind.

Erfindungsgemäß erfolgt die Mengenaufteilung somit bereits im Abpresser der ersten Abpresserstufe oder davor, in einer vor der Abpresserstufe angeordneten oder ausgebildeten Gerätschaft.

Durch die bevorzugte Integration von Sektionen in den Abpresser treten keine zusätzlichen Überführungswege auf. Zudem zeichnet sich die erfindungsgemäße Vorrichtung durch einen geringen Platzbedarf aus, da keine zusätzlichen Pumpen oder Steuerungsmodule für das Verfahren notwendig sind.

Bei einer Trennung der Gesamtmenge des Butterzwischenproduktes in einer Gerätschaft vor der ersten Abpresserstufe, erfolgt die räumliche Trennung der Teilmengen des Butterzwischenproduktes auch in den daran anschließenden Gerätschaften, beispielsweise auch in dem Abpresser erhalten, in welchem sich zwei Schnecken parallel über die Länge des Abpressers erstrecken. Im Fall der Mengenteilung in einer vorgelagerten Gerätschaft wird der Abpresser in zwei Bereiche aufgeteilt, wobei die Schnecken durch eine Wand voneinander getrennt sind.

Ein Butterzwischenprodukt verfügt dabei über eine Konsistenz, die außerhalb der Konsistenz von herkömmlicher Butter liegt. Insbesondere der Buttermilch- bzw. Wassergehalt oder die Buttermilch- und Wasserverteilung sind anders als die eines Endproduktes.

Durch die erfindungsgemäße Vorrichtung können mehrere Buttersorten, zumindest jedoch zwei unterschiedliche Buttersorten, mit unterschiedlichen Qualitäten und/oder Rezepturen in einem Herstellungsprozess gleichzeitig produziert werden. Dabei ist eine gleichbleibende Produktqualität der jeweiligen Butterendprodukte gewährleistet.

Durch ihren kompakten Aufbau ist die erfindungsgemäße Vorrichtung zudem im vorteilhaften CIP-Verfahren reinigbar. Es tritt in der Regel auch keine zusätzliche Produktkontamination, wie dies beispielsweise bei externen Mischern oder Pumpen möglich ist, auf.

Erfindungsgemäß kann beispielsweise neben der normalen Butterproduktion eine weitere Buttersorte mit Geschmacksstoffen versehen werden.

Es ist von Vorteil, wenn die Vorrichtung mehrere Abläufe zur Ausgabe mehrerer Buttersorten sowie eine zweite Abpresserstufe mit mehreren Abpressern aufweist. Durch die räumlich-getrennte gleichzeitige Bearbeitung der beiden Teilmengen des Butterzwischenproduktes innerhalb der Vorrichtung kann eine höhere Effizienz bei der Produktion mehrerer Buttersorten gleichzeitig, sowie der automatisierten Reinigung der Vorrichtung, gegenüber dem bekannten Verfahren erreicht werden.

Um bereits eine Zudosierung von weiteren Zusatzstoffen mit der Mengenteilung des Butterzwischenproduktes vorteilhaft zu kombinieren, können die Sektionen als Mischsektionen ausgebildet sein, welche sowohl das Zudosieren von Zusatzstoffen zum Butterzwischenprodukt als auch das Vermischen dieser Zusatzstoffe mit dem Butterzwischenprodukt gewährleisten.

Es ist vorteilhaft, wenn die vor dem ersten Abpresser angeordnete oder ausgebildete Gerätschaft ein Zuführschacht zur Mengenteilung und gleichzeitigen Überführung des Butterzwischenproduktes von einer Nachbutterungstrommel in den Abpresser ist. Durch die Kombination beider Verfahrensschritte in einer Gerätschaft, kann eine kompakte Bauweise der Butterungsmaschine erreicht werden.

Es ist weiterhin von Vorteil wenn sich nach dem Abpresser der ersten Abpresserstufe mit den Mischsektionen zwei Vakuumkammern derart anschließen, dass durch die räumliche Trennung der einzelnen Vakuumkammern keine Übertragung von Geschmacksstoffen oder dergleichen von einer Teilmasse des Butterzwischenproduktes in eine andere Teilmasse des Butterzwischenproduktes, in welcher diese Geschmacksstoffe unerwünscht sind, erfolgen kann.

Durch Dosieranschlüsse an den Mischsektionen kann eine gezielte Zugabe von Wasser, Molke, Säurekonzentraten, Salzlake und Geschmacksstoffen zu den jeweiligen Teilmassen des Butterzwischenproduktes vorteilhaft ermöglicht werden, um dessen Geschmack und die Konsistenz zu optimieren. Dabei beispielsweise eine oder mehrere Dosieranschlüsse pro Mischsektion vorgesehen sein.

Um ein fraktioniertes Bearbeiten der Teilmasse eines Butterzwischenproduktes zu erreichen und eine Vermischung mit der Gesamtmenge des Butterzwischenproduktes im Abpresser der ersten Abpresserstufe zu verhindern, ist es von Vorteil, wenn die Mischzonen zumindest eine Lochplatte aufweisen, welche die Teilmasse in der Mischsektion von der Gesamtmasse des Butterzwischenproduktes im Abpresser trennt.

Es ist weiterhin von Vorteil, wenn die Mischsektionen durch weitere Lochplatten in Untersektionen unterteilt sind. Dadurch kann eine schrittweise Homogenisierung der Teilmasse des Butterzwischenproduktes mit zudosierten Stoffen vorteilhaft erfolgen. Zudem werden feste Bestandteile der Butter beim Durchpressen durch die Lochplatten nach und nach zerkleinert. Dies kann besonders vorteilhaft unter Zuhilfenahme von Mischflügeln erfolgen.

Es ist besonders von Vorteil, wenn die Mischsektionen zumindest eine verstellbare Drosselplatte mit einer oder mehreren Einrichtungen zur Steuerung des Ausgabevolumens der Teilmasse des Butterzwischenproduktes einer Mischsektion aufweist, so dass die Menge der jeweiligen produzierten Buttersorte nicht nur durch die Dimensionierung der einzelnen Mischsektionen bestimmt wird, sondern eine Einstellung dieser Menge durch die Drosselplatte bzw. einer daran angebrachten Einrichtung steuerbar ist.

Dies kann besonders vorteilhaft konstruktiv durch eine Stellschraube erfolgen, mit der Öffnungen in der Drosselplatte verschließbar sind.
Die Herstellung von Butter mit der erfindungsgemäßen Vorrichtung erfolgt zunächst durch den Zulauf von Rahm in den Butterungszylinder, wo er mittels eines Schlägers in Butterkorn und Buttermilch umgewandelt wird. Anschließend wird die Butterkorngröße des gekühlten Butterkorn/Buttermilchgemisches in der Nachbutterungstrommel eingestellt zudem erfolgt die Grobtrennung von Buttermilch und Butterkorn. Das Butterkorn mit der verbliebenen Buttermilch wird im Anschluss in einen Abpresser überführt. Hier erfolgt eine weitere Trennung der Buttermilch vom Butterkorn. Nach der Trennung wird das Butterkorn zu einem Butterzwischenprodukt mit hohem Buttermilchgehalt umgeformt die Gesamtmasse des Butterzwischenproduktes wird während dieses Umformungsprozesses in zumindest zwei Mischsektionen des Abpressers überführt und in zumindest zwei Teilmassen getrennt. Schließlich werden die Teilmassen des Butterzwischenproduktes räumlich getrennt voneinander weiterbearbeitet, wobei zumindest zwei voneinander unterscheidbare Butterprodukte durch das Verfahren zeitgleich hergestellt werden.

Der Verfahrensschritt der Massentrennung des Butterzwischenproduktes und der Zugabe von Geschmacksstoffen erfolgt im Prozess der Butterung. Dieser Verfahrensschritt ist somit in das bislang bekannten Fritz-Eisenreich Verfahren integriert, wobei die Vermischung des Butterzwischenproduktes mit zusätzlichen Geschmacksstoffen erfolgen kann. Die Mengenaufteilung des Butterzwischenproduktes und Zudosierung von Geschmacksstoffen zu den Teilmassen im Produktionsprozess ermöglicht eine Verbesserung der Energieeffizienz und der Standzeit der einzelnen Vorrichtungsbestandteile gegenüber dem Stand der Technik, sowie eine Integration in die existierende Prozessautomation.

Es können jedoch bereits aufgrund von unterschiedlichen Mischflügeldrehzahlen der Mischstationen oder von unterschiedlichen Schneckendrehzahlen der Abpresser in der zweiten Abpresserstufe unterschiedliche Qualitäten der Endprodukte erreicht werden, ohne dass eine zusätzliche Zugabe von Geschmacksstoffen oder dergleichen erfolgt.

Es ist von Vorteil, wenn die Mengenaufteilung des Butterzwischenproduktes durch eine Drosselvorrichtung erfolgen kann, so dass Butterprodukte in unterschiedlichen Mengenverhältnissen in einem Butterungsgang hergestellt werden können.

Ein Ausführungsbeispiel der Erfindung wird anhand der beigefügten Zeichnungen naher erläutert.

Sie zeigen:
- Fig.1: eine schematische Darstellung einer erfindungsgemäßen Butterungsmaschine, die nach dem Fritz/Eisenreich Verfahren betrieben wird,
- Fig.2: Draufsicht der erfindungsgemäßen Butterungsmaschine,
- Fig.3: Detailansicht einer ersten Abpresserstufe mit anschließender Mischsektion der erfindungsgemäßen Butterungsmaschine, und
- Fig.4: ein schematisches Ablaufflussdiagramm eines Verfahrens zum Herstellen von mehreren Buttersorten

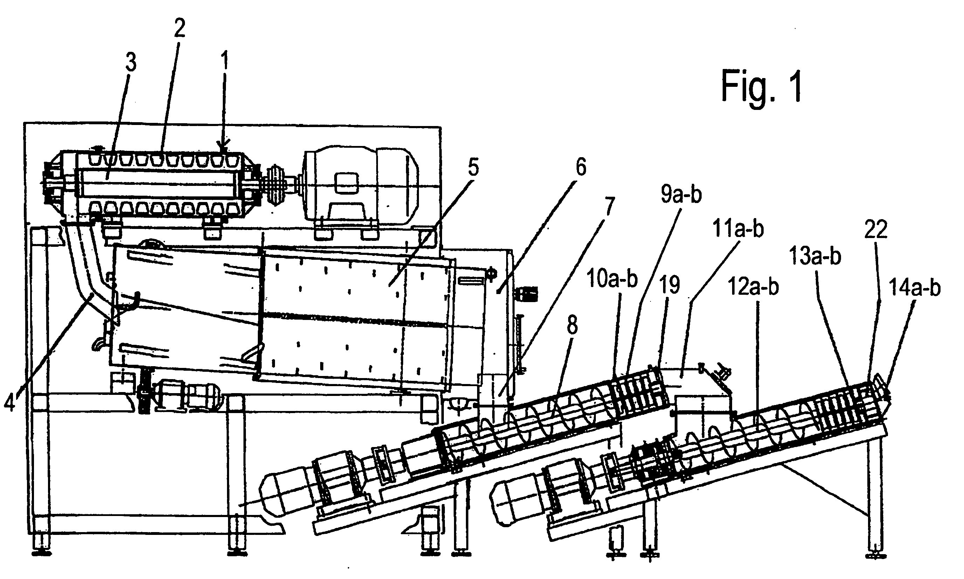

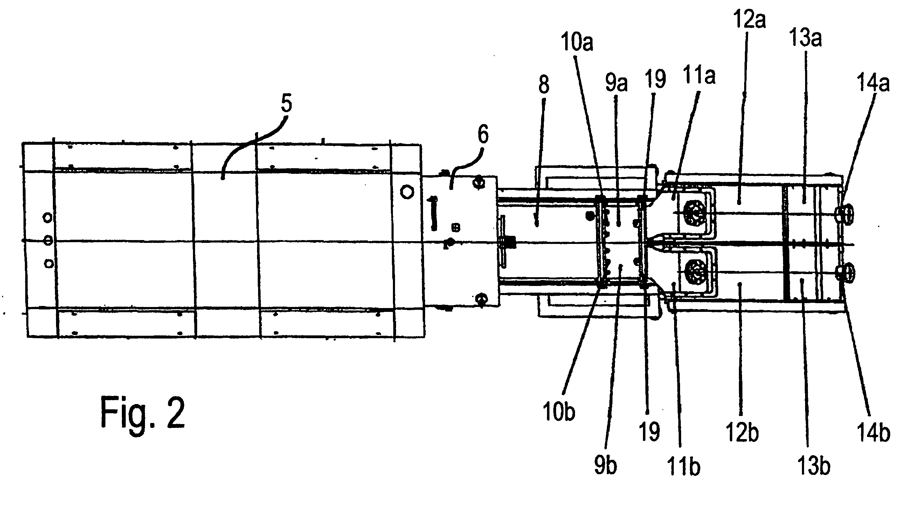

Fig. 1 und Fig.2 zeigen eine Butterungsmaschine, die einen Einlauf 1 für Rahm aufweist, sowie einen Butterungszylinder 2 mit einem drehbar angetriebenen Schläger 3 für die Bildung von Butterkorn und Buttermilch aus zugeführtem Rahm.

In einer Kühlsektion 4 erhält das Butterkorn eine härtere Konsistenz und lässt sich anschließend besser bearbeiten.

In einer Nachbutterungstrommel 5 wird im Nachbutterungsprozess die optimale Butterkorngröße eingestellt.

Das Butterkorn wird anschließend über eine Haube 6 mit einem Zuführschacht 7 in eine erste Abpresserstufe mit einem Abpresser 8 überführt.

Der Abpresser 8 wandelt das Butterkorn in eine homogene "Wasser in Öl Emulsion" um und befreit gleichzeitig das entstandene Butterzwischenprodukt von Buttermilchresten, welche anschließend abgeführt werden.

Im Abpresser 8 sind zwei Mischsektionen 9a und 9b angeordnet, in welchen jeweils eine Teilmasse des Butterzwischenproduktes getrennt bearbeitet werden kann. Somit können verschiedene Butterqualitäten des Endproduktes in kontinuierlicher Herstellung erreicht werden.

Die Mischsektionen 9a oder 9b weisen dabei zumindest je einen Dosieranschluss 10a oder 10b auf, um zusätzliche Geschmacksstoffe, Wasser oder Molke, Säurekonzentrate und Salzlake zu dem Butterzwischenprodukt in vorbestimmter Menge zuzufügen.

Das Butterzwischenprodukt gelangt im Anschluss von jeweils einer Mischsektion 9a oder 9b über eine Vakuumkammer 11a oder 11b in eine zweite Abpresserstufe, bestehend aus zwei Abpressern 12a und 12b. Die zwei Abpresser der zweiten Stufe sind räumlich getrennt, wobei je ein Abpresser 12a oder 12b eine Teilmasse des Butterzwischenproduktes je einer Mischsektion 9a oder 9b bearbeitet. In der jeweiligen Vakuumkammer 11a, 11b wird der jeweiligen Teilmasse des Butterzwischenproduktes Luft entzogen, um deren Haltbarkeit zu erhöhen und um eine Schichtenbildung durch Lufteinschluß zu verhindern.

Die Abpresser 12a, 12b der zweiten Abpresserstufe sorgen zusammen mit den sich daran anschließende Mischzonen 13a, 13b für eine gleichmäßige Verteilung des Wassergehaltes und eine Optimierung des Wassergehaltes in den beiden Teilmassen des Butterzwischenproduktes.

Die Butterendprodukte verlassen die Butterungsmaschine über Ausläufe, welche in der vorliegenden Zeichnung durch zwei Mundstücke 14a und 14b und einer Austragspumpe 22 dargestellt sind.

Eine Mengenteilung des Butterzwischenproduktes kann auch erfolgen, indem im Zuführschacht 7 eine Trennwand vorgesehen ist. Diese Trennwand erstreckt sich ebenfall über die Länge des Abpressers 8, welcher dadurch in zwei Teile mit zwei separaten Schnecken unterteilt wird.

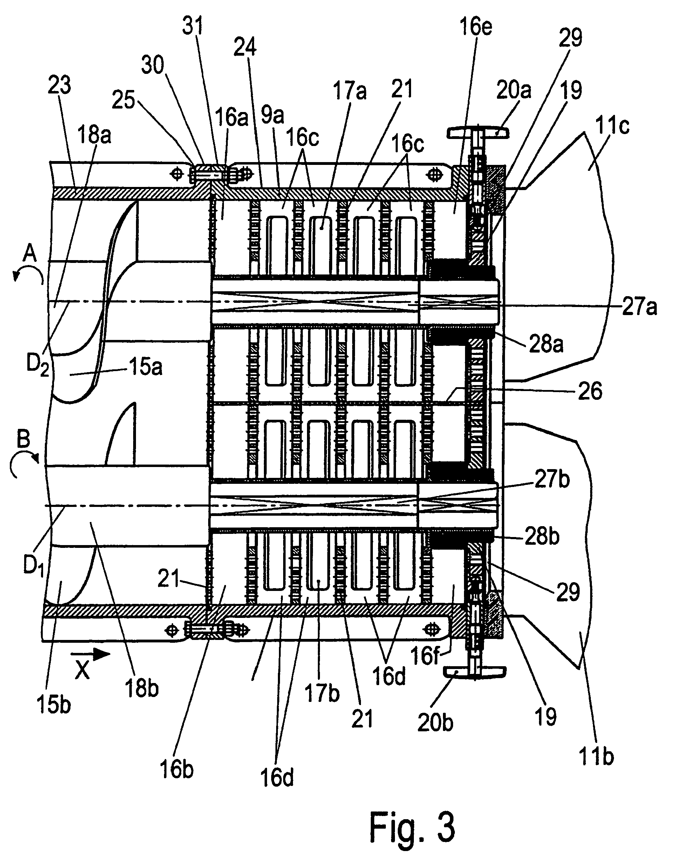

Fig. 3 zeigt den Aufbau des Abpressers 8, sowie der Mischsektionen 9a und 9b im Detail.

Der Abpresser 8 weist ein längliches mehrteiliges Gehäuse 23, 24 auf, in welchem zwei Schnecken 15a und 15b angeordnet sind, die Rotationsachsen D₁ und D₂ aufweisen. Die zwei Schnecken 15a und 15b liegen nebeneinander, wobei die Rotationsachsen D₁, D₂ parallel ausgerichtet sind.

Durch die Schnecken 15a, 15b erfolgt zusätzlich zur Umwandlung des Butterkorns in eine homogene "Wasser in Öl Emulsion" und der Abführung der Buttermilch, eine erste Grobteilung der Masse des Butterzwischenproduktes und ein Transport der Teilmassen in Flussrichtung X zu den Mischsektionen 9a und 9b. Dabei ist die Drehrichtung A und B der drehbaren Schnecken 15a und 15b gegenläufig, wodurch eine gleichmäßigere Mengenaufteilung des Butterzwischenproduktes erreicht wird.

Der Gehäuseabschnitt 23 des Abpressers 8 ist an seinem einen axialen Ende offen ausgebildet. Auf diesem axialen Ende ist ein weiterer Gehäuseabschnitt 24 aufgeflanscht, wobei die Flansche 30, 31 mit Schrauben 25 formschlüssig verbunden sind. Der Behälter 24 ist durch eine Trennwand 26, die parallel zu den Drehachsen D₁ und D₂ angeordnet ist, in zwei Sektionen, die Mischsektionen 9a und 9b unterteilt. Die Mischsektion sind nebeneinander angeordnet und sind Bestandteil des Abpressers 8.

Die Teilmassen des Butterzwischenproduktes werden durch eine Lochplatte 21 gepresst und gelangen somit in die Mischsektion 9a oder 9b.

Die Mischsektionen sind durch mehrere, hier beispielhaft sechs, Lochplatten 21 in mehrere, hier beispielhaft sechs, Untersektionen 16a-16f in der jeweiligen Mischsektion unterteilt. In einigen dieser Untersektionen sind Mischflügel 17a, 17b angeordnet. Diese Mischflügel sind auf einer drehbaren Welle 27a oder 27b in je einer Mischsektion 9a oder 9b angeordnet, wobei die Welle 27a oder 27b mit jeweils einer drehbaren Welle 18a oder 18b einer Schnecke 15a oder 15b des Abpressers 8 fluchtet und drehfest mit dieser verbunden ist. An einem Ende sind die Wellen 27a, 27b mit Lagern 28a, 28b in eine Drosselplatte 19 eingesetzt.

Diese Anordnung der Wellen 27a, b und der Wellen 18a, b ist besonders vorteilhaft, da somit die Mischflügel 17a, 17b und die Schnecken 15a, 15b mit nur einem Antrieb bewegt werden können. Dadurch kann vorteilhaft eine besonders kostengünstige Verarbeitung des Butterzwischenproduktes und eine Vereinfachung der Geräteanordnung erreicht werden.

Die Wellen 27a und 27b mit den Mischflügel 17a, 17b können auch über einen separaten Antrieb gedreht werden oder über ein regelbares Getriebe mit der jeweiligen Schneckenwelle 18a, 18b verbunden sein, um die Umdrehungszahl der Mischflügel unabhängig von der Umdrehungszahl der Schnecke 15a, 15b zu steuern.

Die Anzahl und Aufteilung der Untersektionen 16a-f, die Anzahl der Mischflügel 17a, 17b je Mischsektion 9a oder 9b, sowie die Dimensionierung und Anzahl der einzelnen Mischsektionen 9a, 9b kann konstruktiv derart variiert werden, dass im weiteren Verlauf der Bearbeitung verschiedene Butterqualitäten durch die erfindungsgemäße Butterungsmaschine herstellbar sind. Dies schließt auch die Herstellung von Buttermischungen mit zusätzlichen Geschmacksstoffen ein, welche über Dosieranschlüsse zur Butter zugegeben werden können. Dabei kann der Wassergehalt des Butterzwischenproduktes durch die Butterungsmaschine bereits im Butterungsprozess an den jeweiligen Geschmacksstoff und dessen Eigenkonsistenz angepasst werden.

Das Butterzwischenprodukt verlässt die jeweilige Mischsektion 9a oder 9b durch eine oder mehrere Drosselplatten 19, welche je eine Stellschraube 20a oder 20b pro Mischsektion 9a oder 9b aufweisen. Die Drosselplatte weist zudem verschließbare Öffnungen 29 auf, welche durch Betätigung der Stellschraube 20a oder 20b teilweise oder vollständig verschließbar sind.

Über die Einstellung der Drosselplatten 19 und der Stellschrauben 20a oder 20b kann die Mengenverteilung auf die nachfolgende zweite Abpresserstufe, der Gegendruck für die Mischsektion 9a oder 9b und die Schichtdicke des Butterzwischenproduktes in den Vakuumkammern 11a oder 11b eingestellt werden. Die Aufteilung der Menge erfolgt durch die Lochplatte 21 und den jeweils an den Stellschrauben 20a, 20b eingestellten Widerstand bei der Drosseleinrichtung 19.

Die einzelnen Bestandteile der Vorrichtung können nach der jeweiligen Rezeptur der Butter verändert werden. So kann beispielsweise je nach Konsistenz der zudosierten Geschmacksstoffe die Schneckendrehzahl des jeweiligen Abpressers 12a, 12b der zweiten Abpresserstufe. Es ist auch möglich die Drehzahl der Mischflügel 17a, 17b der Mischsektionen 9a, 9b je nach vorgegebener Rezeptur zu steuern und/oder zu regeln. Dies kann vorzugsweise in Abhängigkeit von der Schneckendrehzahl, aber auch unabhängig davon erfolgen. Es ist ebenso möglich, das Abführen einer Butterzwischenproduktmenge aus einer der beiden Mischsektionen 9a oder 9b durch die jeweilige Stellschraube 20a oder 20b zu verhindern, um im weiteren Verlauf der Verarbeitung auch ein einziges Butterendprodukt zu erzeugen.

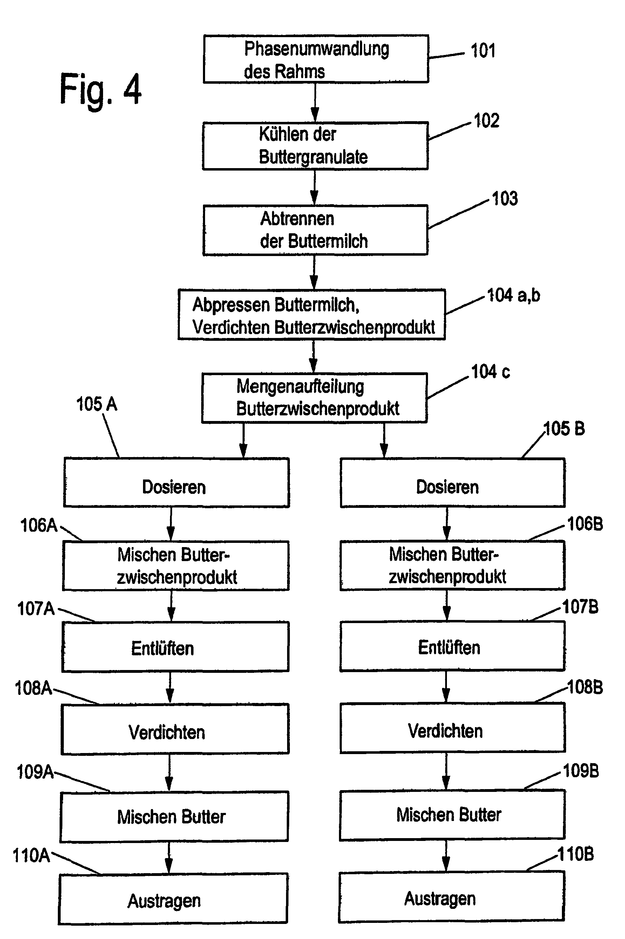

Figur 4 zeigt einen schematischen Ablauf zur Herstellung mehrerer Buttersorten in einem Butterungsprozess durch Mengenaufteilung 104c eines Butterzwischenproduktes, wobei das Butterzwischenprodukt aufgrund seines erhöhten Flüssigkeitsgehaltes noch nicht in seiner Konsistenz und seinem Fliessverhalten mit einer Butter gleichzusetzen ist.

Dabei kommt es zunächst in einem Butterungszylinder einer Butterungsmaschine zur Phasenumwandlung 101 des Rahms, wobei der Rahm in Buttermilch und Butterkorn umgewandelt wird.

Daran schließt sich ein Kühlen 102 des Butterkorns an, wobei dem Butterkorn dadurch eine Konsistenz verliehen wird, welche die nachfolgende Bearbeitung in einem Nachbutterungsprozess ermöglicht. Das Kühlen 102 erfolgt dabei in der Kühlsektion einer Butterungsmaschine. An das Kühlen 102 des Butterkorns schließt sich in einem Nachbutterungsprozess das Abtrennen 103 der Buttermilch an. Dieses Abtrennen 103 ist dabei eine Grobtrennung in eine im Wesentlichen feste, hochviskose Butterkornmasse und eine flüssige Buttermilch.

In einer ersten Abpresserstufe erfolgt das Abpressen 104a von Buttermilch aus dem Butterkorn, das Verdichten 104b des Butterkorns zu einem Butterzwischenprodukt und die Mengenaufteilung 104c dieses Butterzwischenprodukts in zwei Teilmengen A und B. Die jeweilige Teilmenge A oder B wird in dem nachfolgenden Bearbeitungsschritten getrennt behandelt, um unterschiedliche Butterqualitäten und/oder Buttersorten und/oder Butterungen zu erhalten. Die Abpresserstufe bzw. der Abpresser kann dabei eine zweiteilige Mischsektion aufweisen, welche im Anschluss an die Mengenaufteilung 104c ein Dosieren 105A, 105B von Zusatzstoffen in fester oder flüssiger Form erfolgen und ein Mischen 106A, 106B des Butterzwischenproduktes mit diesen Zusatzstoffen erfolgen.

Dies ist aufgrund des erhöhten Flüssigkeitsgehaltes des Butterzwischenproduktes und der damit höheren Viskosität dieses Butterzwischenproduktes gegenüber Butter besonders vorteilhaft, da durch die Misch- und Dosiereinrichtung ein geringerer Energieaufwand erbracht werden muss, um ein gleichmäßiges Vermischen der Zusatzstoffe mit dem Butterzwischenprodukt zu erreichen.

Zusätzlich zum Mischen 106A, 106B des Butterzwischenproduktes mit Zusatzstoffen kann auch eine Feineinstellung des Flüssigkeitsgehaltes des Butterzwischenproduktes erfolgen. Im Anschluss wird die Mischung aus Butterzwischenprodukt und Zusatzstoffen in eine Vakuumsektion überführt, wo ein Entlüften 107A, 107B der jeweiligen Teilmenge A oder B erfolgt. Dieses Entlüften geschieht in je einer getrennten Vakuumsektion für die jeweilige Teilmenge A oder B.

In einer weiteren Abpresserstufe, in der die jeweilige Teilmenge A oder B getrennt voneinander bearbeitet wird, erfolgt eine Umwandlung des Butterzwischenproduktes durch Verdichten 108A, 108B des Butterzwischenproduktes unter Abscheiden von überschüssiger Buttermilch, so dass der Buttermilchgehalt dem einer Rohbutter entspricht.

In einer sich an die Abpresserstufe anschließenden Mischsektion kann nochmals ein Mischen 109A, 109B der Butter erfolgen. Abschließend erfolgt ein Austragen 110A, 110B der jeweiligen Teilmenge A oder B aus der Butterungsmaschine.

### Bezugszeichen

- Einlauf: 1
- Butterungszylinder: 2
- Schläger: 3
- Kühlsektion: 4
- Nachbutterungstrommel: 5
- Haube: 6
- Zuführschacht: 7
- Abpresser: 8
- Mischsektion: 9a, 9b
- Dosieranschluss: 10a, 10b
- Vakuumkammer: 11a, 11b
- Abpresser: 12a, 12b
- Mischzone: 13a, 13b
- Mundstück: 14a, 14b
- Schnecke: 15a, 15b
- Untersektion: 16 a-f
- Mischflügel: 17a, 17b
- Welle: 18a, 18b
- Drosselplatte: 19
- Stellschraube: 20a, 20b
- Lochplatte: 21
- Austragspumpe: 22
- Gehäuse: 23, 24
- Schrauben: 25
- Trennwand: 26
- Welle: 27a, 27b
- Lager: 28a, 28b
- Öffnungen: 29
- Flansche: 30, 31
- Drehrichtung: A, B
- Rotationsachsen: D₁, D₂
- Flussrichtung: X
- Phasenumwandlung: 101
- Kühlen: 102
- Abtrennen: 103
- Abpressen: 104a
- Verdichten: 104b
- Mengenaufteilung: 104c
- Dosieren: 105A, B
- Mischen: 106A, B, 109A, B
- Entlüften: 107A, B
- Verdichten: 108A, B
- Austragen: 110A, B

## Patentansprüche

1. Vorrichtung zum Herstellen von mehreren Buttersorten die einen Einlauf (1), einen Butterungszylinder (2) mit einem drehbaren Schläger (3) und zumindest eine erste Abpresserstufe mit einem Abpresser (8) aufweist, **dadurch gekennzeichnet, dass** in dem Abpresser (8) oder in einer vor dem Abpresser angeordneten Gerätschaft (1-7) zumindest zwei Sektionen (9a, 9b) zur Mengenaufteilung eines Butterzwischenproduktes angeordnet oder ausgebildet sind.

2. Vorrichtung nach Anspruch 1, **dadurch gekennzeichnet, dass** die Vorrichtung eine zweite, der ersten Abpresserstufe nachgeschalteten Abpresserstufe mit mehreren Abpressem (12a, 12b) aufweist.

3. Vorrichtung nach Anspruch 1 oder 2, **dadurch gekennzeichnet, dass** die Sektionen (9a, 9b) als Mischsektionen (9a, 9b) ausgebildet sind.

4. Vorrichtung nach einem der vorhergehenden Ansprüche, **dadurch gekennzeichnet, dass** die Gerätschaft (1-7) ein Zuführschacht (7) ist, zur Mengenteilung und Überführung der Teilmassen des Butterzwischenproduktes von einer Nachbutterungstrommel (5) in den Abpresser (8).

5. Vorrichtung nach einem der vorhergehenden Ansprüche, **dadurch gekennzeichnet, dass** die Anzahl der Abläufe (14a, 14b), der Abpresser (12a, 12b) der zweiten Abpresserstufe und/oder die Anzahl der Schnecken (15a, 15b) der ersten Abpresserstufe der Anzahl der Mischsektionen (9a, 9b) entspricht.

6. Vorrichtung nach einem der vorhergehenden Anspruche, **dadurch gekennzeichnet, dass** sich nach einer Mischsektion (9a, )b) jeweils eine Vakuumkammer (11a, 11 b) anschließt.

7. Vorrichtung nach einem der vorhergehenden Ansprüche, **dadurch gekennzeichnet, dass** die Mischsektionen (9a, 9b) Dosieranschlüsse (10a, 10b) aufweisen.

8. Vorrichtung nach einem der vorhergehenden Ansprüche, **dadurch gekennzeichnet, dass** die Mischsektionen (9a, 9b) zumindest eine Lochplatte (21) aufweisen.

9. Vorrichtung nach einem der vorhergehenden Ansprüche, **dadurch gekennzeichnet, dass** die Mischsektionen (9a, 9b) zumindest eine Drosselplatte (19) zur Ausgabe zumindest einer Teilmasse des Butterzwischenproduktes aufweist.

10. Vorrichtung nach einem der vorhergehenden Ansprüche, **dadurch gekennzeichnet, dass** die Drosselplatte (19) zumindest eine Einrichtung (20a, 20b) zur Steuerung des Ausgabevolumens der Teilmasse des Butterzwischenproduktes einer Mischsektion (9a, 9b) aufweist.

11. Vorrichtung nach einem der vorhergehenden Ansprüche, **dadurch gekennzeichnet, dass** die Drosselplatte (19) mindestens eine Stellschraube (20a, 20b) zur Steuerung des Ausgabevolumens der Teilmasse des Butterzwischenproduktes einer Mischsektion (9a, 9b) aufweist.

12. Vorrichtung nach einem der vorhergehenden Ansprüche, **dadurch gekennzeichnet, dass** die Mischsektionen (9a, 9b) durch Lochplatten (21) in Untersektionen (16a-f) unterteilt und durch Blenden separat einstellbar sind.

13. Vorrichtung nach einem der vorhergehenden Ansprüche, **dadurch gekennzeichnet, dass** in einer Mischsektion (9a, 9b) zumindest ein Mischflügel (17a, 17b) angeordnet ist.

14. Verfahren zum Herstellen von mehreren Buttersorten, bei dem das Herstellen mehrerer Buttersorten durch Mengenaufteilung eines Butterzwischenproduktes im Butterungsprozess mit einer Vorrichtung nach einem der vorhergehenden Ansprüchen mit folgenden Schritten erfolgt:
a. Phasenumwandlung (101) von zulaufendem Rahm in einem Butterungszylinder (2) mittels eines Schlägers (3) in Butterkorn und Buttermilch;
b. Kühlen (102) des Butterkorns
c. Abtrennen (103) der Buttermilch vom Butterkorn in eine Nachbutterungstrommel (5);
d. Überführen des Butterkorn/Buttermilch Gemisch in einen Abpresser (8);
e. Abpressen (104a) der Buttermilch vom Butterkorn und Verdichten (104b) des Butterkorns mittels des Abpressers (8), wobei das Butterkorn zu einem Butterzwischenprodukt umgeformt wird und eine Mengenteilung (104c) der Gesamtmasse des Butterzwischenproduktes durch Einbringen in zumindest zwei Mischsektionen (9a, 9b) des Abpressers (8) erfolgt und
f. Weiterbehandlung (105-110A, 105-110B) der räumlich getrennten Teilmassen des Butterzwischenproduktes, wobei zumindest zwei voneinander unterscheidbare Butterprodukte durch das Verfahren hergestellt werden.

15. Verfahren nach Anspruch 14, **dadurch gekennzeichnet, dass** die Mengenaufteilung des Butterzwischenproduktes in gleichen oder unterschiedlichen Mengenverhältnissen durch wenigstens eine Drosselvorrichtung (19, 20a, 20b) eingestellt wird.

## Claims

1. Device for producing a plurality of butter varieties, said device having an inlet (1), a butter-making cylinder (2) having a rotatable beater (3), and at least one first texturizing stage having a texturizer (8), **characterized in that** at least two sections (9a, 9b) for dividing the mass of an intermediate butter product are disposed or configured in the texturizer (8) or in an apparatus (1-7) which is disposed ahead of the texturizer.

2. Device according to Claim 1, **characterized in that** the device has a second texturizing stage which has a plurality of texturizers (12a, 12b) and which is downstream of the first texturizing stage.

3. Device according to Claim 1 or 2, **characterized in that** the sections (9a, 9b) are configured as mixing sections (9a, 9b).

4. Device according to one of the preceding claims, **characterized in that** the apparatus (1-7) is a supply duct (7) for dividing the mass and transferring the part-masses of the intermediate butter product from a post-churning drum (5) to the texturizer (8).

5. Device according to one of the preceding claims, **characterized in that** the number of procedures (14a, 14b) of the texturizers (12a, 12b) of the second texturizing stage, and/or the number of worms (15a, 15b) of the first texturizing stage, correspond(s) to the number of mixing sections (9a, 9b).

6. Device according to one of the preceding claims, **characterized in that** each mixing section (9a, 9b) is adjoined by one vacuum chamber (11 a, 11 b).

7. Device according to one of the preceding claims, **characterized in that** the mixing sections (9a, 9b) have metering connectors (10a, 10b).

8. Device according to one of the preceding claims, **characterized in that** the mixing sections (9a, 9b) have at least one perforated plate (21).

9. Device according to one of the preceding claims, **characterized in that** the mixing sections (9a, 9b) have at least one throttle plate (19) for delivering at least a part-mass of the intermediate butter product.

10. Device according to one of the preceding claims, **characterized in that** the throttle plate (19) has at least one installation (20a, 20b) for controlling the delivery volume of the part-mass of the intermediate butter product of a mixing section (9a, 9b).

11. Device according to one of the preceding claims, **characterized in that** the throttle plate (19) has at least one set screw (20a, 20b) for controlling the delivery volume of the part-mass of the intermediate butter product of a mixing section (9a, 9b).

12. Device according to one of the preceding claims, **characterized in that** the mixing sections (9a, 9b) are subdivided into sub-sections (16a-f) by perforated plates (21), and are separately adjustable by apertures.

13. Device according to one of the preceding claims, **characterized in that** at least one mixing impeller (17a, 17b) is disposed in a mixing section (9a, 9b).

14. Method for producing a plurality of butter varieties, in which method producing a plurality of butter varieties is performed by dividing the mass of an intermediate butter product in the butter-making process by a device according to one of the preceding claims, said method having the following steps:
a. phase-transforming (101) infed cream in a butter-making cylinder (2) by means of a beater (3), so as to form butter grain and butter milk;
b. cooling (102) the butter grain;
c. separating (103) the butter milk from the butter grain into a post-churning drum (5);
d. transferring the mixture of butter grain/butter milk to a texturizer (8);
e. texturizing (104a) the butter milk from the butter grain, and compressing (104b) the butter grain by means of the texturizer (8), the butter grain being transformed into an intermediate butter product, and dividing (104c) of the entire mass of the intermediate butter product being performed by infeeding into at least two mixing sections (9a, 9b) of the texturizer (8); and
f. further treating (105-110A, 105-110B) the spatially separated part-masses of the intermediate butter product, at least two butter products which are mutually distinguishable being produced by the method.

15. Method according to Claim 14, **characterized in that** dividing the mass of the intermediate butter product using identical or dissimilar proportions is adjusted by at least one throttle device (19, 20a, 20b).

## Revendications

1. Dispositif pour fabriquer plusieurs types de beurre présentant une entrée (1), un cylindre de barattage (2) avec un battoir (3) rotatif et au moins un premier étage de pressage avec un pressoir (8), **caractérisé en ce qu'**au moins deux sections (9a, 9b) sont disposées ou formées dans le pressoir (8) ou dans un appareillage (1-7) disposé avant le pressoir pour répartir les quantités d'un produit intermédiaire de barattage.

2. Dispositif selon la revendication 1, **caractérisé en ce qu'**il présente un deuxième étage de pressage monté en aval du premier étage de pressage et possédant plusieurs pressoirs (12a, 12b).

3. Dispositif selon la revendication 1 ou 2, **caractérisé en ce que** les sections (9a, 9b) sont conformées comme des sections de mélange (9a, 9b).

4. Dispositif selon l'une des revendications précédentes, **caractérisé en ce que** l'appareillage (1-7) est une gaine d'arrivée (7) pour la répartition de quantités et le transfert des masses partielles du produit intermédiaire de barattage d'un tambour de post-barattage (5) au pressoir (8).

5. Dispositif selon l'une des revendications précédentes, **caractérisé en ce que** le nombre de processus (14a, 14b), de pressoirs (12a, 12b) du deuxième étage de pressage et/ou de vis sans fin (15a, 15b) du premier étage de pressage correspond au nombre de sections de mélange (9a, 9b).

6. Dispositif selon l'une des revendications précédentes, **caractérisé en ce qu'**une chambre à vide (11 a, 11 b) se raccorde après chaque section de mélange (9a, 9b).

7. Dispositif selon l'une des revendications précédentes, **caractérisé en ce que** les sections de mélange (9a, 9b) présentent des raccords de dosage (10a, 10b).

8. Dispositif selon l'une des revendications précédentes, **caractérisé en ce que** les sections de mélange (9a, 9b) présentent au moins une plaque perforée (21).

9. Dispositif selon l'une des revendications précédentes, **caractérisé en ce que** les sections de mélange (9a, 9b) présentent au moins une plaque d'étranglement (19) pour la sortie d'au moins une masse partielle du produit intermédiaire de barattage.

10. Dispositif selon l'une des revendications précédentes, **caractérisé en ce que** la plaque d'étranglement (19) présente au moins une installation (20a, 20b) pour la régulation du volume de masse partielle du produit intermédiaire de barattage sortant d'une section de mélange (9a, 9b).

11. Dispositif selon l'une des revendications précédentes, **caractérisé en ce que** la plaque d'étranglement (19) présente au moins une vis de réglage (20a, 20b) pour réguler le volume de la masse partielle du produit intermédiaire de barattage sortant d'une section de mélange (9a, 9b).

12. Dispositif selon l'une des revendications précédentes, **caractérisé en ce que** les sections de mélange (9a, 9b) sont divisées en sous-sections (16a-f) par des plaques perforées (21) et ajustables séparément par des volets.

13. Dispositif selon l'une des revendications précédentes, **caractérisé en ce qu'**une ailette mélangeuse (17a, 17b) est disposée dans chaque section de mélange (9a, 9b).

14. Procédé pour la fabrication de plusieurs types de beurre, dans lequel la fabrication de plusieurs types de beurre est réalisée par répartition des quantités d'un produit intermédiaire de barattage pendant le processus de barattage avec un dispositif selon l'une des revendications précédentes, avec les étapes suivantes :
a. changement de phase (101) de la crème amenée dans un cylindre de barattage (2) en grains de beurre et babeurre au moyen d'un battoir (3) ;
b. réfrigération (102) des grains de beurre ;
c. séparation (103) du babeurre et des grains de beurre dans un tambour de post-barattage (5) ;
d. transfert du mélange de grains de beurre et de babeurre dans un pressoir (8) ;
e. expression (104a) du babeurre des grains de beurre et compactage (104b) des grains de beurre au moyen du pressoir (8), les grains de beurre étant mis en forme pour donner un produit intermédiaire de barattage et une répartition de quantités (104c) de la masse totale de produit intermédiaire de barattage étant réalisée par introduction dans au moins deux sections de mélange (9a, 9b) du pressoir (8) et
f. poursuite du traitement (105-110A, 105-110B) des masses partielles de produit intermédiaire de barattage séparées dans l'espace, de sorte que le procédé donne au moins deux produits à base de beurre pouvant être différenciés l'un de l'autre.

15. Procédé selon la revendication 14, **caractérisé en ce que** la répartition des quantités du produit intermédiaire de barattage en proportions égales ou différentes est ajustée par au moins un dispositif d'étranglement (19, 20a, 20b).
